# EUROPEAN PATENT APPLICATION

(11) **EP 1 612 776 A2**
(43) Date of publication of application: **04.01.2006**
(21) Application number: 05104765.2
(22) Date of filing: 01.06.2005
(51) Int. Cl.: G11B 5/53, G11B 15/61

(54) **A Head Drum**

(30) Priority: 28.06.2004 KR 2004048818
(71) Applicant: SAMSUNG ELECTRONICS CO., LTD., Suwon-Shi, Gyeonggi-Do 442-742 (KR)
(72) Inventor: BAIK, Chung-hum, 106-1102, Dongsuwon LG Village,, Gyeonggi-do (KR); KIM, Myoung-joon, 2-201, Green Villa, 44-10,, Gyeonggi-do, (KR); KIM, Bong-joo, 208-1001, Dongsuwon LG Village,, Gyeonggi-do, (KR); SEO, Jae-kab, 301-402, Dongsuwon LG Village 3rd,, Gyeonggi-do, (KR); KIM, Jun-young, 108-1904, Dongsuwon Village 1st,, Gyeonggi-do (KR); CHO, Young-ho, 101-502, Samsung Apt., 76-7,, Gyeonggi-do, (KR)
(74) Representative: Geary, Stuart Lloyd

(57) **Abstract**

A head drum assembly and method of manufacturing a magnetic recording/reproducing apparatus are disclosed. In the assembly, for application of a pre-load on the upper and the lower bearings, the upper and the lower bearings are installed in a loosely fitting manner on the shaft. An elastic member for applying a load on an inner ring of either of the upper and the lower bearings is provided so that simplification of the manufacturing process of the head drum assembly, cost reduction, and productivity improvement are achieved.

## Description

The present invention relates to a head drum comprising a shaft, a head-carrying part rotatably mounted to the shaft by first and second axially spaced bearings, having inner and outer races, and a spring means for applying a bearing preloading force.

Typically, a bearing is installed between a rotating body and a shaft which supports the rotating body as it rotates around the shaft. However, due to tolerances in the bearing, the accuracy of the rotation of the rotary body deteriorates. Thus, a head drum assembly of the magnetic recording/reproducing apparatus which is required to rotate accurately and at high speed compensates for the inaccuracies by applying a predetermined pre-load force on the bearing.

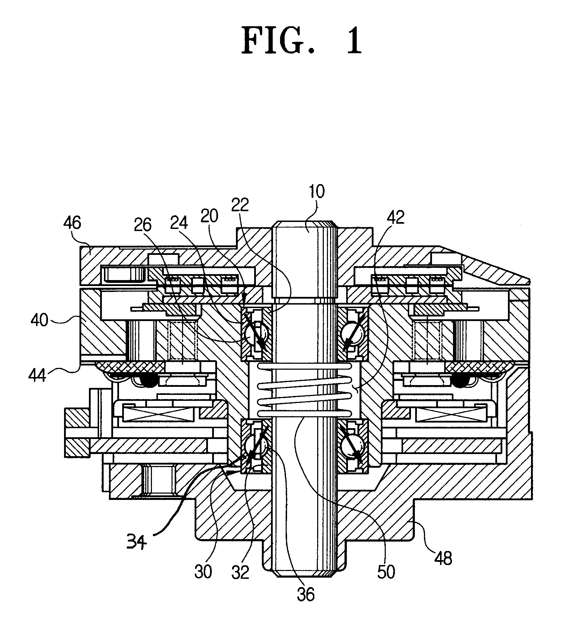

Figure 1 is a cross-sectional view schematically showing a known head drum assembly.

Referring to Figure 1, the head drum assembly of the magnetic recording/reproducing apparatus includes a rotational drum 40 for supporting a magnetic head 44. The magnetic head 44 records and reproduces (plays back) information by scanning a moving magnetic tape. A fixing drum 48 is forcedly fit, over the rotational drum 40, onto a lower side of a shaft 10 which is joined to a middle axial cavity 42 formed in the rotational drum 40. An upper bearing 20 and a lower bearing 30 configured so that they are located one above the other between the rotational drum 40 and the shaft 10 and a coil spring 50 interposed between the upper bearing 20 and the lower bearing 30 is provided. The coil spring 50 applies a pre-load to the upper bearing 20 and the lower bearing 30 and is installed over the shaft 10 so as to apply the load on a respective inner ring (race) 22 and 32 in opposite directions.

Here, an outer ring 24 of the upper bearing 20 is forcedly fitted adjacent the middle axial cavity 42, and the inner ring 22 of the upper bearing 20 is forcedly fit to the shaft 10. An outer ring 34 of the lower bearing 30 is forcedly fit adjacent the middle axial cavity 42 and the inner ring 32 of the lower bearing 30 is inserted onto the shaft 10 in a loosely fitting manner. The coil spring 50 applies a load, in opposing directions, to the inner ring 22 of the upper bearing 20 and the inner ring 32 of the lower bearing 30. Since the inner ring 22 of the upper bearing 20 is forcedly fit onto the shaft 10, force applied to the inner ring 22 of the upper bearing 20 by the coil spring 50 is transferred to the shaft and expended. However, since the inner ring 32 of the lower bearing 30 is loosely fit to the shaft 10, force transferred to the inner ring 32 of the lower bearing 30 by the coil spring 50 causes displacement of the inner ring 32 of the lower bearing 30 onto the lower part of the rotational drum 40. Accordingly, the force transferred to the inner ring 32 of the lower bearing 30, as shown in Figure 1, applies a load to a lower ball bearing 36. Also, the force transferred to the lower ball bearing 36 acts on a lower part of the rotational drum 40 via the inner ring 32. This force is transferred to the outer ring 24 of the upper bearing 20 which is forcedly fit adjacent the middle axial cavity 42 of the rotational drum 40. This causes downwards displacement of the outer ring 24. The force transferred to the outer ring 24 of the upper bearing 20 acts on an upper bearing ball 26 in the direction shown in Figure 1 to apply a load thereon.

If the upper and the lower bearings 20 and 30 are all forcedly fit onto the shaft 10, the force from the coil spring 50 is transferred to the shaft 10 and expended. Therefore, the load is not applied on the upper and the lower bearing balls 26 and 36. Also, if both the upper and the lower bearings 20 and 30 are fitted to the shaft 10 in a loosely fitting manner, the inner ring 22 and 32 of the upper and the lower bearings 20 and 30 move relative to one another and the rotational drum 40 moves up and down, which is problematic. Thus, the inner ring 22 of the upper bearing 20 is forcedly fit to the shaft 10 and the inner ring 32 of the lower bearing 30 is loosely fit to the shaft 10.

However, to form such a pre-loading structure because of the dimensional problem of the inner ring where the inner ring 22 of the upper bearing 20 is forcedly fit to the shaft 10 and the inner ring 32 of the lower bearing 30 is loosely fitted to the shaft 10, the inner diameter of the inner ring 22 of the upper bearing 20 is not the same as the inner diameter of the inner ring 32 of the lower bearing 30. This means two types of bearings are used. Since two types of bearings are used, the assembly process becomes complicated, and the manufacturing costs of the bearings also increases.

The order in which the head drum is assembled will be described. The upper bearing 20 is forcedly fit to the shaft 10. Next, the upper bearing 20 forcedly fit to the shaft 10 is forcedly fit in the rotational drum 40. The coil spring 50 then fits over the shaft 10 from its lower part to its upper part so that the coil spring 50 is positioned on the inner ring 22 of the upper bearing 20. Next, the lower bearing 30 is fitted to the shaft 10 and forcedly fit in the rotational drum 40. Lastly, the shaft 10 inserted into the rotational drum 40 which is forcedly fit in a drum cover 46 and the fixing drum 48. Since the foregoing process includes lots of forcedly fitting steps, manufacturing efficiency of the head drum assembly is reduced.

The present invention has been developed in order to solve the above drawbacks and other problems associated with the known art.

The present invention relates to a head drum comprising a shaft, a head-carrying part rotatably mounted to the shaft by first and second axially spaced bearings, having inner and outer races, and a spring means for applying a bearing preloading force.

A head drum according to the present invention is characterised in that the inner races are movable with respect to the shaft, a stop is provided on the shaft to limit the movement of the inner race of the second bearing in one direction and the spring means is installed such that the bearings are between the spring means and the stop and the preloading force is applied to the inner race of the first bearing in said direction.

Other additional and/or preferred features are set forth in claims 12 and 13 appended hereto.

An embodiment of the present invention will now be described, by way of example only, and with reference to Figures 2 to 5B of the accompanying drawings, in which:
Figure 1 is a cross-sectional view of a known head drum assembly;
Figure 2 is a perspective view schematically showing a magnetic
recording/reproducing apparatus according to an embodiment of the present invention;
Figure 3 is a cross-sectional view taken along line III-III of Figure 2;
Figure 4 is a conceptual view illustrating a pre-load principle of upper and lower bearings shown in Figure 3; and
Figures 5A through 5E are cross-sectional views illustrating a process for assembling a head drum assembly according to an embodiment of the present invention.

In the drawings, it should be understood that like reference numerals refer to like structure and features.

The matters defined in the description such as a detailed construction and elements are exemplary. Thus, it should be apparent that the present invention can be performed without the examples. Also, well-known functions or constructions are not described in detail since they would obscure the invention in unnecessary detail.

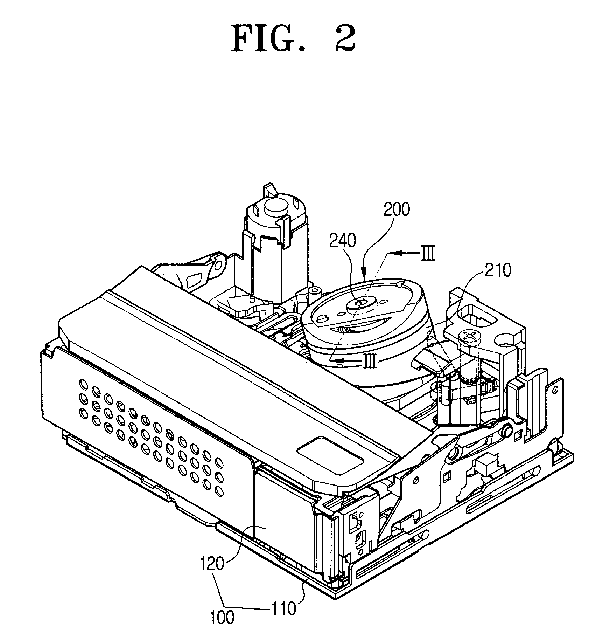

Referring to Figure 2, the magnetic recording/reproducing apparatus according to an embodiment of the present invention includes a deck 100 on which a magnetic tape is mounted and where a variety of parts for recording on and reproducing from the magnetic tape is installed. The deck 100 has a sub-deck 120 and a main deck 110. Also provided is a head drum assembly 200 which is installed on the deck 100, for recording and information on and reading from the magnetic tape. The head drum assembly 200 is installed at a predetermined inclination on the main deck 110 and has a rotational drum 210 rotating at a high speed, for recording and reproducing the information. The rotational drum 210 applies a predetermined pre-load, due to its high rotational speed, on a bearing. The bearing is located where the rotational drum 210 is rotatably supported by a shaft 240. Such a pre-load structure and the head drum assembly 200 will be described in detail in the following.

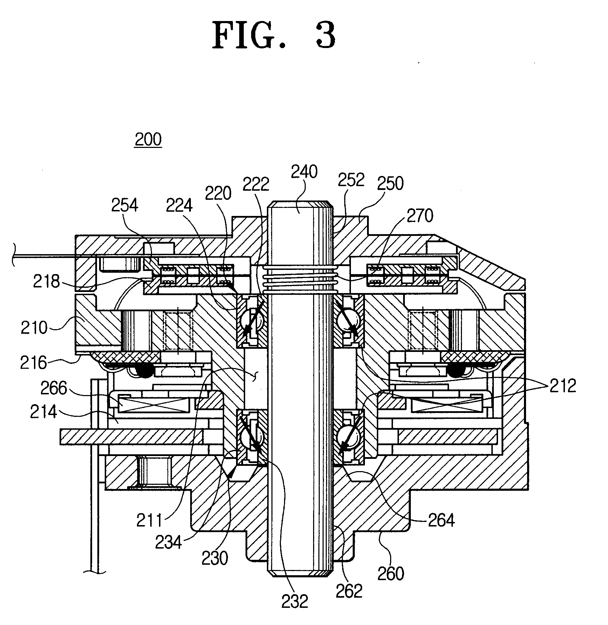

Referring to Figure 3, the head drum assembly 200 includes a rotational drum 210 whose central axis is arranged in parallel with a shaft 240. Upper and lower bearings 220 and 230 are arranged on upper and lower areas of the shaft 240 between the rotational drum 210 and the shaft 240. A drum cover 250 and a fixing drum 260 are arranged above and below the rotational drum 210, respectively, and are fixed to both ends of the shaft 240. An elastic member 270 is installed in such a way that one end presses against an inner ring 222 of the upper bearing 220 and its other end is supported by the drum cover 250.

The rotational drum 210 is coupled to the shaft 240 having the rotational drum 210 interposed between the upper and the lower bearings 220 and 230, so that it can rotate around the shaft 240. Rotation is performed by interaction between a motor stator 214 installed on the fixing drum 260 and the rotor 266 installed in the lower part of the rotational drum 210. If the rotational drum 210 rotates, a head 216 fixed on the rotational drum 210 obtains and reads information or, records information onto the magnetic tape.

The outer rings 224 and 234 of the upper and the lower bearings 220 and 230 are forcedly fit to a middle axial cavity 211 formed in the rotational drum 210, so that these bearings 220 and 230 are coupled to the rotational drum 210. Also, the upper and the lower bearings 220 and 230 are inserted into the shaft 240 in a loosely fitting manner. The upper end of the inner ring 222 is pressed against by the elastic member 270 and the lower end of the outer ring 224 is settled on a bearing settling part 212 formed on the middle axial cavity 211 of the rotational drum 210. The lower end of the inner ring 232 of the lower bearing is supported by a projection 264 formed on the upper end of a lower axial cavity 262 of the fixing drum 260. Also, the upper end of the outer ring 234 is settled on a bearing settling part 212 formed on the middle axial cavity 211 of the rotational drum 210.

An upper axial cavity 252 is formed on the drum cover 250 so that the upper part of the shaft 240 is fixed in a forcedly fitting manner. The elastic member 270 is supported by the periphery of the lower part of the upper axial cavity 252. Also, a fixed transformer 254 is installed on the drum cover 250 which corresponds to a rotational transformer 218 installed on the rotational drum 210. With such a construction, signals can be exchanged between the rotational drum 210 and the controlling part. Since a detailed description would be known to those skilled in the art, a detailed description will be omitted.

A lower axial cavity 262 is formed on the fixing drum 260 so that the fixing drum 260 is forcedly fixed to the lower part of the shaft 240. A upward projection 264 is formed on the periphery of the upper edge of the lower axial cavity 262, and the lower end of the inner ring 232 is supported by this projection 264. Also, a motor stator 214 is installed on the fixing drum 260 so that it corresponds to a rotor 266 fixed on the rotational drum 210.

The elastic member 270 is supported on one end by the upper end of the inner ring 222 so that it applies a load to the inner ring 222 of the upper bearing 220. The other end of the elastic member 270 is supported by the periphery of the lower part of the upper axial cavity 252 of the drum cover 250.

Although the fixing transformer 254 is fixed to the drum cover 250 and the motor stator 214 is installed on the fixing drum 260 in this embodiment, the present invention is not limited to this construction. Namely, the head drum assembly 200 may be changed so that the motor stator 214 is installed in the drum cover 250 and the fixing transformer 254 is installed on the fixing drum 260. Also, a coil spring is shown in the drawing as an example of the elastic member 270, the elastic member is not limited to this and the embodiment of the present invention is applicable to any member as far as it has elasticity.

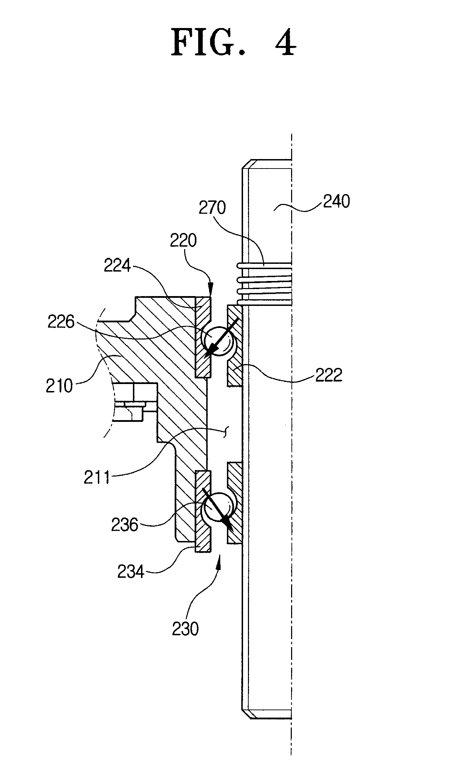

A pre-load is applied, in the direction of an arrow, on the upper and the lower bearings 220 and 230 as shown in Figure 3. The principle by which such a pre-load is applied, will be described in detail with reference to Figure 4.

Referring to Figure 4, the elastic member 270 applies a load on the inner ring 222 of the upper bearing 220. By applying such a load, the inner ring 222 of the upper bearing 220 (which is joined to the shaft 240 in a loosely fitting manner) is displaced downwardly. Though the displacement of the inner ring 222 is shown in an exaggerated manner for an understanding of this embodiment of the present invention, a small movement in the displacement will in reality be made, This may not be identifiable by the human eye. As the inner ring 222 is displaced downwardly, an upper bearing ball is displaced downwardly. However, as the outer ring 224is forcedly fit to the rotational drum 210, the outer ring 224 is not moved. Resultantly, the structure of the upper bearing 220 enters a state as shown in Figure 4. Due to this structure, the force applied to the inner ring 222 of the upper bearing 220 by the elastic member 270 is transferred to the upper bearing ball 226 in the direction shown in Figure 4. Thus, the pre-load is applied.

The force applied to the upper bearing ball 226 is transferred to the outer ring 224. At this point, since the outer ring 224 of the upper bearing 220 is forcedly fit in the rotational drum 210, downward force is applied on the rotational drum 210. The force transferred to the rotational drum 210 is transferred to the outer ring 234 of the lower bearing 230 which forcedly fit in the middle axial cavity 211 of the rotational drum 210. Due to this force, the outer ring 234 of the lower bearing 230 is displaced downwardly. Due to such a displacement, the lower bearing ball 236 is moved slightly downwardly. Thus, the lower bearing 230 has an arrangement as shown in Figure 4. Due to such an arrangement, the force transferred to the outer ring 234 of the lower bearing 230 applies a pre-load, in the direction of the arrow as shown in Figure 4, on the lower bearing ball 236. According to the above pre-load structure, an inner diameter of the inner ring 222 of the upper bearing 220 and an inner diameter of the inner ring 232 of the lower bearing 230 can be manufactured to be the same size, and accordingly, the upper bearing 220 and the lower bearing 230 can be constructed as the same bearing. Therefore, the upper and the lower bearings 220 and 230 need not be assembled separately. This simplifies the assembly process and reduces costs as the same bearing is used.

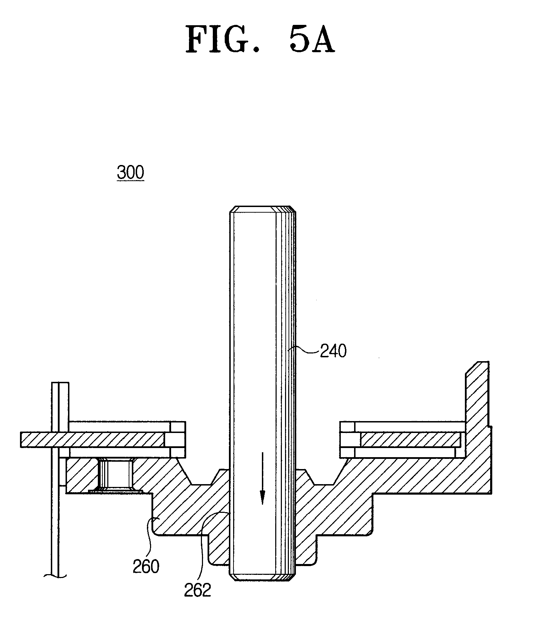

Referring to Figure 5A, the shaft 240 is forcedly fit in the lower axial cavity 262 formed on the fixing drum 260. By such forcedly fitting, the shaft 240 is fixed in the fixing drum 260 and the first assembly 300 is completed.

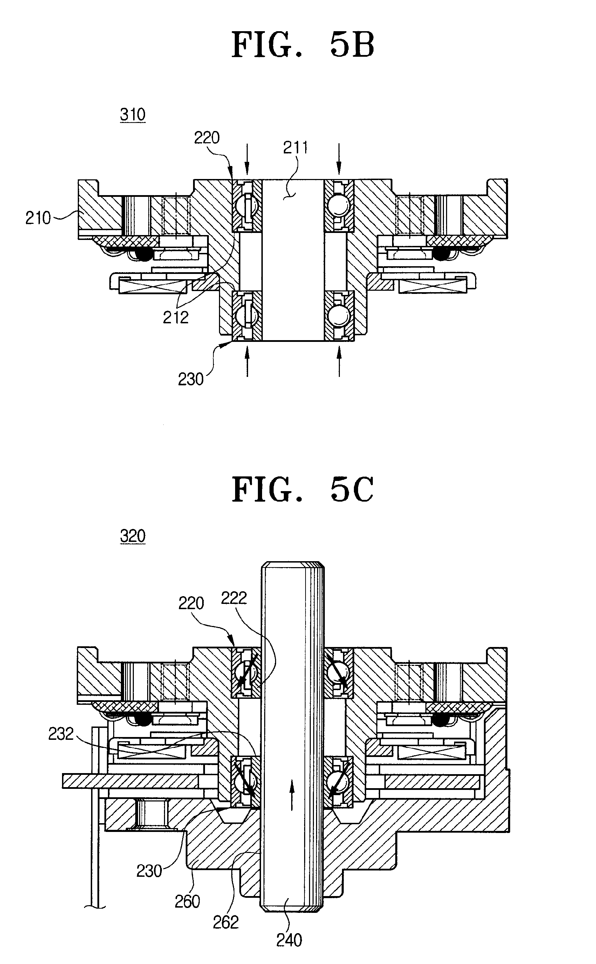

Referring to Figure 5B, the upper bearing 220 is forcedly fit, in the upward to downward direction, in the middle axial cavity 211, and the lower bearing 230 is forcedly fit, in the downward to upward direction of the rotational drum 210. The upper and the lower bearings 220 and 230 are forcedly pressed up until the bearing settling part 212, where they are located. This completes the second assembly 310.

Referring to Figure 5C, the shaft 240 forcedly fit in the lower axial cavity 262 of the fixing drum 260 in the first assembly 300, is inserted, in a sliding manner, through the inner rings 222 and 232 of the upper and the lower bearings 220 and 230 of the second assembly 310. This completes the third assembly 320. The inner diameters of the inner rings 222 and 232 of the upper and the lower bearings 220 and 230, are larger than the diameter of the shaft 240, so that the shaft 240 is inserted, in a loosely fitting manner, into the inner rings 222 and 232 of the upper and the lower bearings 220 and 230. Once the insertion is complete, the projection 264 projected upward from the outer periphery of the lower axial cavity 262 of the fixing drum 260 is touched by the inner diameter of the lower bearing 230.

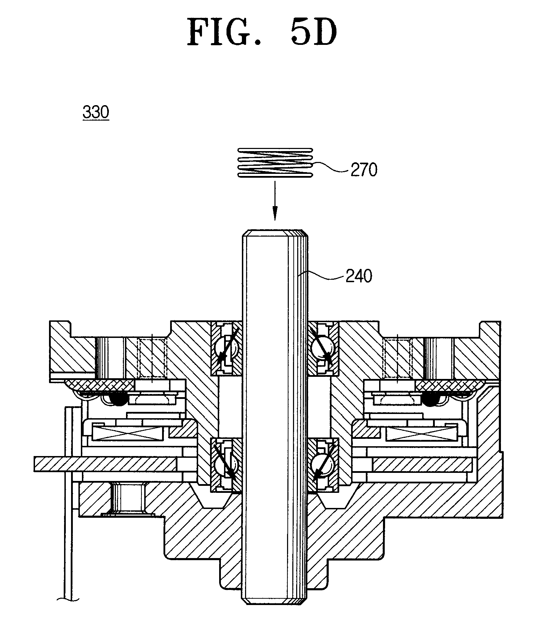

Referring to Figure 5D, the elastic member 270 (in this case the coil spring) is inserted into the third assembly 320. The coil spring 270, is inserted around the outer periphery of the shaft 240. This completes the fourth assembly 330. It is preferable that as the coil spring 270 has a slightly larger diameter than the diameter of the shaft 240, the coil spring 270 is inserted by a little force from above. Due to the diameter, the coil spring 270 moves little around the outer periphery of the shaft 240 after being inserted onto the shaft 240.

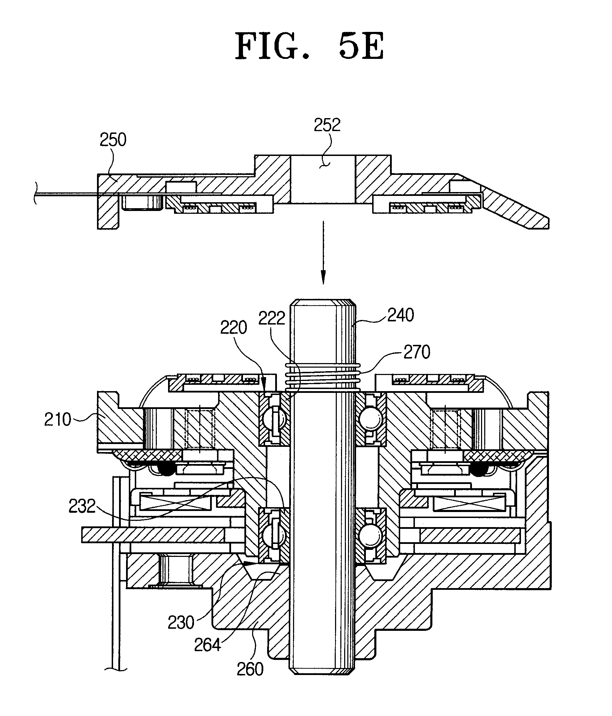

Referring to Figure 5E, an upper part of the shaft 240 of the fourth assembly 330 is forcedly fit in the upper axial cavity 252 formed on the drum cover 250. At this point, the elastic member 270 is compressed by being pressed by one end of the drum cover 250. The compressed elastic member 270, applies a load to the inner ring 222 of the upper bearing 220, and the projection 264 of the fixing drum 260 applies a load on the inner ring 232 of the lower bearing 230. Thus, a pre-load is applied to the upper and the lower bearings 220 and 230 so that the rotational drum 210 is rotated in a stable manner.

As described above, according to the improved head drum assembly of the present invention and the magnetic recording/reproducing apparatus having the same, and the method for assembling the head drum assembly, the inner diameters of the upper and the lower bearings are made the same, so that the assembling process is simplified. Also, since the same bearing is used for the upper and the lower bearings, bearing manufacturing costs can be reduced.

Also, since the number of forcedly fitting processes is reduced compared with the known assembling process for the head drum assembly, the productivity of the head drum assembly can be improved.

## Claims

1. A head drum assembly of a magnetic recording/reproducing apparatus comprising:
a rotational drum rotatably disposed on a shaft;
an upper bearing and a lower bearing installed between the rotational drum and the shaft;
a fixing drum and a drum cover respectively fixed to the shaft, the upper and the lower bearings being installed on the shaft in a loosely fitting manner to apply a pre-load on the upper and the lower bearings; and
an elastic member for applying a load on an inner ring of either of the upper and the lower bearings.

2. The head drum assembly according to claim 1, wherein the upper and the lower bearings have the same diameter.

3. The head drum assembly according to claim 2, wherein a projection is formed on the fixing drum, for supporting the inner ring of the lower bearing, and the elastic member applies a load on the inner ring of the upper bearing.

4. The head drum assembly according to claim 3, wherein the elastic member is a coil spring.

5. A magnetic recording/reproducing apparatus comprising:
a deck on which a variety of parts for recording and reproducing data on and from the magnetic tape is installed; and
a head drum assembly which includes a rotational drum mounted on the deck and rotatably disposed on a shaft, for recording and reproducing information on and from the magnetic tape;
an upper bearing and a lower bearing installed between the rotational drum and the shaft;
a fixing drum and a drum cover fixed to the shaft, the upper and the lower bearings being installed on the shaft, in a loosely fitting manner to apply a pre-load on the upper and the lower bearings; and
an elastic member for applying a load on an inner ring of either of the upper and the lower bearings is provided.

6. The magnetic recording/reproducing apparatus according to claim 5, wherein the upper and the lower bearings have the same diameter.

7. The magnetic recording/reproducing apparatus according to claim 6, wherein a projection is formed on the fixing drum, for supporting the inner ring of the lower bearing, and the elastic member applies a load on the inner ring of the upper bearing.

8. A method for assembling a head drum assembly of a magnetic recording/reproducing apparatus rotatably disposed on a deck, for recording and reproducing data on and from a magnetic tape, the method comprising the steps of:
preparing a first assembly by forcedly fitting a shaft in a fixing drum;
preparing a second assembly by forcedly fitting a plurality of bearings in a rotational drum;
combining the first assembly and the second assembly by loosely fitting a plurality of bearings in the shaft; and
installing an elastic member on the shaft so that a load is applied on an inner ring of any one of a plurality of bearings.

9. The method according to claim 8, wherein the step of installing the elastic member comprises the steps of:
mounting the elastic member on the shaft so that one side of the inner ring of any one of a plurality of bearings contacts one side of the elastic member; and
forcedly fitting the drum cover in the shaft so that a load is applied on the other side of the elastic member.

10. The method according to claim 8, wherein a plurality of bearings comprises an upper bearing and a lower bearing, the fixing drum has a projection in its upper end, and the step of combining the first assembly and the second assembly comprises the steps of:
loosely fitting the shaft in the lower bearing;
loosely fitting the shaft in the upper bearing; and
closely fitting the second assembly in the shaft so that the inner ring of the lower bearing is supported by the projection.

11. A head drum (200) comprising a shaft (240), a head-carrying part (210) rotatably mounted to the shaft (240) by first and second axially spaced bearings (220, 230), having inner and outer races (222, 224, 232, 234), and a spring means (270) for applying a bearing preloading force, **characterised in that** the inner races (222, 232) are movable with respect to the shaft (240), a stop (264) is provided on the shaft (240) to limit the movement of the inner race (222, 232) of the second bearing (230) in one direction and the spring means (270) is installed such that the bearings (220, 230) are between the spring means (270) and the stop (264) and the preloading force is applied to the inner race (222, 232) of the first bearing (220) in said direction.

12. A head drum (200) according to claim 1, wherein the first and second bearings (220, 230) are identical and contact respectively first and second parts of the shaft (240) having the same diameter.

13. A head drum (200) according to either one of claims 1 or 2, wherein the stop (264) is formed on a fixing drum (260) mounted on the shaft (240).
